# EUROPÄISCHE PATENTSCHRIFT

(11) **EP 1 068 040 B1**
(45) Veröffentlichungstag und Bekanntmachung des Hinweises auf die Patenterteilung: **09.01.2002**
(21) Anmeldenummer: 99939140.2
(22) Anmeldetag: 25.02.1999
(51) Int. Cl.: B23D 25/12, B26D 1/62

(54) **HOCHGESCHWINDIGKEITSSCHERE ZUM QUERTEILEN VON WALZBAND**
HIGH SPEED SHEARING MACHINE FOR HOT CUTTING OF BAND IRON
CISAILLLE ULTRA-RAPIDE POUR LE TRON ONNAGE D'UN FEUILLARD A CHAUD

(30) Priorität: 09.03.1998 DE 19809813
(43) Veröffentlichungstag der Anmeldung: 17.01.2001
(73) Patentinhaber: SMS SCHLOEMANN-SIEMAG AKTIENGESELLSCHAFT, 40237 Düsseldorf (DE)
(72) Erfinder: GRAFE, Horst, D-57271 Hilchenbach (DE); BEUTER, Matthias, D-57319 Bad Berleburg (DE); FUHRMANN, Karl-Friedrich, D-57271 Hilchenbach (DE); MÜNKER, Erich, D-57223 Kreuztal (DE)
(74) Vertreter: Valentin, Ekkehard, Dipl.-Ing.
(86) Internationale Anmeldenummer: EP9901221
(87) Internationale Veröffentlichungsnummer: WO9946076

(56) Entgegenhaltungen:
- DE-A- 2 718 793
- FR-A- 2 149 173
- GB-A- 725 146

## Beschreibung

Die Erfindung betrifft eine fliegende Schere mit auf einander gegenüberstehenden Trommeln angeordneten Schneidwerkzeugen, die durch mindestens eine ihnen zugeordnete Antriebsvorrichtung auf eine der Geschwindigkeit des zu schneidenden Bandes entsprechende Umfangsgeschwindigkeit beschleunigbar sind und mit einer der Trommeln zugeordneten separat ansteuerbaren Anstellvorrichtung.

Eine ähnliche Schere ist durch die DE-OS 21 38 478 bekanntgeworden. Diese Schere ist jedoch zum Schneiden von schnellaufendem Draht bestimmt. Zum Schneiden von Bändern offenbart die DE-OS 41 28 970 in einem Ständer angeordnete Linearführungen für die Trommeln. Hier werden Messer verwendet, die eine sehr exakte Synchronisation zwischen Trommelantrieb und Anstellantrieb benötigen, um einen entsprechend sauberen Schnitt durchführen zu können. Durch diese sehr exakte Synchronisation werden derartige Scheren verhältnismäßig langsam.

Die GB 725,146 A offenbart eine gattungsgemäße Schere, mit den Merkmalen der Oberbegriffe der Ansprüche 1 und 4, die dazu dient, exakte Schnitte zum Querteilen von Bändern durchzuführen. Dazu werden aufwendige Getriebe zum Synchronisieren der beiden Schertrommeln offenbart und eine ebenso aufwendige Kupplung vorgeschlagen, mittels derer die in einer Schwinge gelagerte Trommel zum jeweils gewünschten Schnitt über einen Kurbelantrieb anstellbar ist. Die Schere ist jedoch mit diesem Getriebe und der Aufwendigen Kupplung nicht dazu geeignet, Warmband mit Bandgeschwindigkeit von bis zum 30 m/sek. zu schneiden.

Der Erfindung liegt die Aufgabe zugrunde, fliegende Scheren zum Schneiden von Warmband so weiterzuentwickeln, daß gute Schneidergebnisse auch bei Bandgeschwindigkeiten von bis zu 30 m/sec und bei minimalen Banddicken gewährleistet werden.

Die Erfindung ist in den Patentansprüchen 1 und 4 definiert.

Durch diesen Aufbau der Schere wird erreicht, daß die Trommeln stets mit einer der Geschwindigkeit des zu schneidenden Bandes entsprechenden Umfangsgeschwindigkeit bzw. einer gegen diese geringfügig abgesenkte Umfangsgeschwindigkeit betrieben werden können. Dabei können die Schneidwerkzeuge stets die Schneidbewegung ausführen, ohne daß es zu einem Schnitt kommt. Erst wenn ein Schnitt ausgeführt werden soll, werden die Stützelemente in Wirkstellung gebracht. Die nächste Schneidbewegung der Schneidwerkzeuge führt dann zum Schnitt.

Es besteht auch die Möglichkeit, nur die Trommeln ständig auf entsprechende Umfangsgeschwindigkeit zu belassen und die Anstellvorrichtung nur für einen Schnitt anzutreiben.

Alternativ kann selbstverständlich auch die Antriebsvorrichtung für die Trommeln während der Zeiten, in der kein Schnitt erfolgen soll, zum Stillstand gebracht werden. Um diese Trommeln jedoch zum Schnitt zu beschleunigen, werden erheblich größere Motorleistungen benötigt als wenn die Trommeln ständig mit entsprechender Umfangsgeschwindigkeit laufen würden.

Von Vorteil ist, wenn die Stützelemente in ihrer Wirklänge verriegelbar sind. Dadurch wird erreicht, daß ein Auffedern zwischen den Trommeln auf ein Minimum beschränkt wird, so daß möglichst exakte Schnitte erfolgen können. Bei entsprechender Dimensionierung der Stützelemente kann die Kraftübertragung direkt durch diese, d.h. ohne entsprechende Verriegelung erfolgen.

Durch die Verwendung von Meißel und Amboß als Schneidwerkzeuge ist eine sehr genaue Synchronisation, wie sie bei Schneidmessern notwendig ist, nicht erforderlich. Dennoch ist eine Synchronisation zwischen den Antriebsvorrichtungen und den Antrieben bzw. Kurbeln angebracht, wobei jedoch geringe Schlupfe durch die Tatsache, daß größere Mantelbereiche als Amboß wirken, ausgeglichen werden können.

Es ist empfehlenswert, die Stützelemente vor Beginn des Arbeitshubes der Antriebe bzw. Kurbeln in ihre Wirkstellung zu bringen. Damit ist gewährleistet, daß während des Schnittes die Stützelemente sich schon in Wirkstellung befinden und nicht durch Verstellungen der Stützelemente während des Schnittes Unregelmäßigkeiten entstehen können.

Bei den hier zu schneidenden sehr dünnen Warmbändern hat es sich gezeigt, daß die Bandanfänge nach einem Schnitt sehr schwer zu führen sind. Daher ist von großer Bedeutung, die Schneidvorrichtungen in einen entsprechenden Haspel zu integrieren bzw. mit minimalem Abstand vor dem Haspel anzuordnen.

Die Erfindung wird anhand einer Zeichnung näher erläutert. Dabei zeigen
- Figur 1: in schematischer Darstellung eine erfindungsgemäße Schere,
- Figur 2: eine gegenüber Fig. 1 weitere Lösung für den Anstellantrieb,
- Figur 3: die schematische Darstellung einer weiteren erfindungsgemäßen Schere, und
- Figur 4: eine in einen Haspel integrierte erfindungsgemäße Schere.

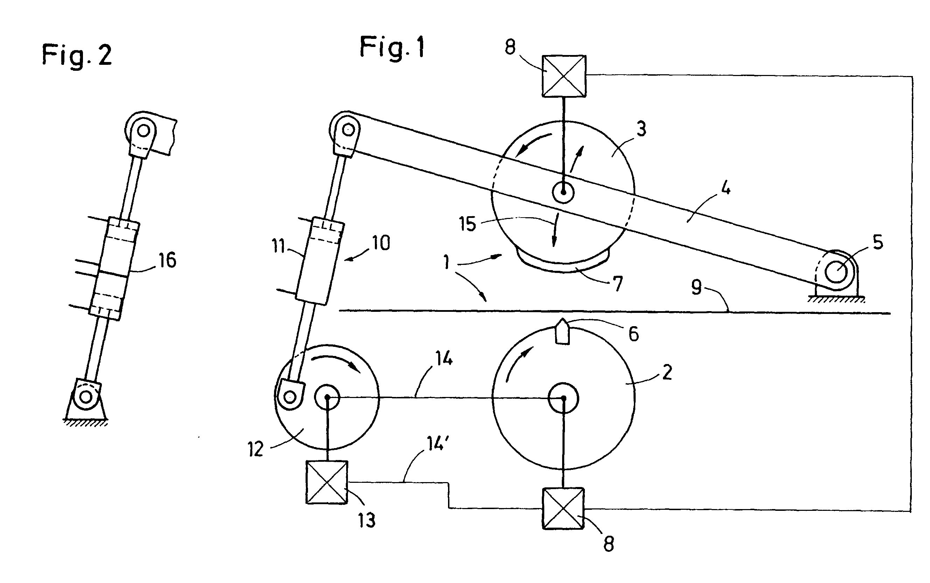

Figur 1 zeigt eine Schere 1, die eine Trommel 2 und eine Trommel 3 aufweist. Die Trommel 3 wird von einer Schwinge 4 getragen. Ein Arm der Schwinge 4 ist um den Schwenkpunkt 5 verschwenkbar gelagert. Die Trommel 2 weist einen Meißel 6 auf, während die Trommel 3 mit einem Amboß 7 versehen ist. Die Trommeln 2 und 3 werden durch Antriebsvorrichtungen 8 auf eine der Geschwindigkeit des laufenden Bandes 9 entsprechende Umfangsgeschwindigkeit drehangetrieben. Dabei ist eine mechanische bzw. elektrische oder elektronische Synchronisation zwischen den Antrieben 8 und damit zwischen den Trommeln 2 und 3 vorgesehen. Am zweiten Ende der Schwinge 4 ist ein Stütz- element 10 angeordnet, welches in seiner Länge einstellbar ist und im wesentlichen aus einer Kolben-Zylinder-Einheit 11 besteht. Das Stützelement 10 ist an einer Kurbel 12 angelenkt, die von einem Antrieb 13 beaufschlagt wird.

Die Funktion der Schere 1 ist wie folgt: Die Trommeln 2 und 3 werden durch die Antriebe 8 ständig auf entsprechender Umfangsgeschwindigkeit gehalten bzw. vor einem Schnitt auf die notwendige Umfangsgeschwindigkeit gebracht. Die Kurbel 12 wird ebenfalls ständig angetrieben bzw. vor einem Schnitt auf die entsprechende Umlaufgeschwindigkeit gebracht. Dabei kann das Verhältnis der Umfangsgeschwindigkeiten zwischen der Trommel 2 und der Kurbel 12 z.B. auf 1:8 eingestellt werden. Eine mögliche Synchronisation zwischen der Trommel 2 und der Kurbel 12 ist durch die Linie 14 bzw. die Linie 14' angedeutet. Durch die Drehbewegung der Kurbel 12 wird die Kurbel 3 entlang des Pfeiles 15 ständig hin- und herbewegt. Soll diese Anstellbewegung zum Schnitt führen, so wird die Kolben-Zylinder-Einheit 11, bevor die Kurbel den unteren Totpunkt erreicht, zusammengefahren und gegebenenfalls arretiert. Damit wird die Trommel 3 auf einen erheblich verminderten Abstand zur Trommel 2 geschwenkt. Beim nächsten Erreichen des unteren Totpunkts der Kurbel 12 wird dann der entsprechende Schnitt ausgeführt. Durch die Synchronisation zwischen der Kurbel 12 und der Trommel 2 wird erreicht, daß wenn sich die Kurbel 12 am unteren Totpunkt befindet, der Meißel 6 dem Amboß 7 gegenübersteht, so daß das Band 9 getrennt werden kann.

Figur 2 zeigt, daß anstelle des aus der Kurbel 12, dem Antrieb 13 und dem Stützelement 10 bestehenden Anstellantrieb eine Kolben-Zylinder-Einheit 16 verwendet werden kann, wobei diese Kolben-Zylinder-Einheit zwei getrennt beaufschlagbare Kolben aufweist. Der obere Kolben entspricht dem der Kolben-Zylinder-Einheit 11, während der untere Kolben die Kurbel 12 und den Antrieb 13 ersetzt.

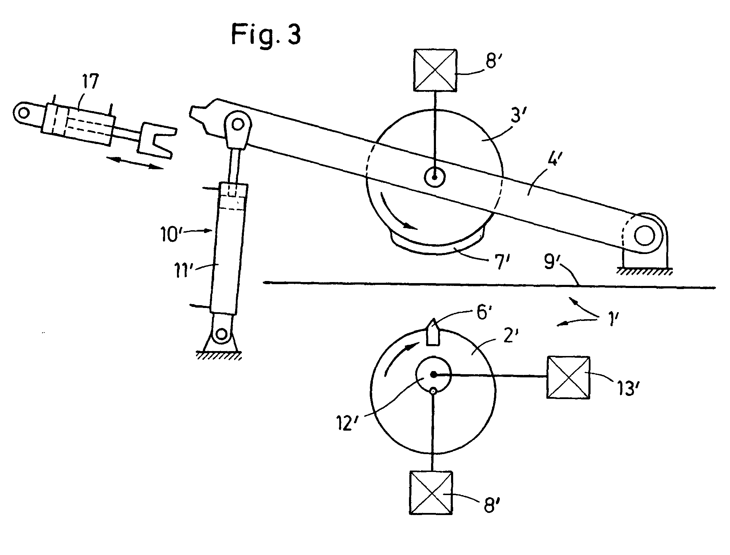

Figur 3 zeigt eine Schere 1', die aus den Trommeln 2' und 3' besteht, wobei die Trommel 3' auf der Schwinge 4' gehalten ist. Die Trommel 2' ist über eine Kurbel 12' exzentrisch gelagert. Über eine Arretiervorrichtung 17 läßt sich die Schwinge 4' in der unteren Position des Kolbens der Kolbenzylindereinheit 11' verriegeln. Die Funktion der Scheren 1' ist wie folgt: Die Trommeln 2' und 3' werden durch den Motor 8' ständig angetrieben bzw. vor einem Schnitt auf entsprechende Umfangsgeschwindigkeit beschleunigt. Gleiches gilt für die Kurbel 12', die vom Antrieb 13' beaufschlagt ist. Dadurch führt die Trommel 2' neben der durch die Antriebsvorrichtung 8' bewirkten Kreisbewegung eine überlagerte, durch die Kurbel 12' bewirkte Hubbewegung aus. Soll das Band 9' geschnitten werden, so wird die Kolben-Zylinder-Einheit 11', bevor der Meißel 6' seinen oberen Punkt in der Zeichnung erreicht, eingefahren, und durch die Arretiervorrichtung 17 gesperrt. Der Abstand zwischen den Trommeln 2' und 3' ist damit so stark verringert, daß beim nächsten Erreichen des oberen Totpunktes durch den Meißel 6' das Band 9' getrennt wird.

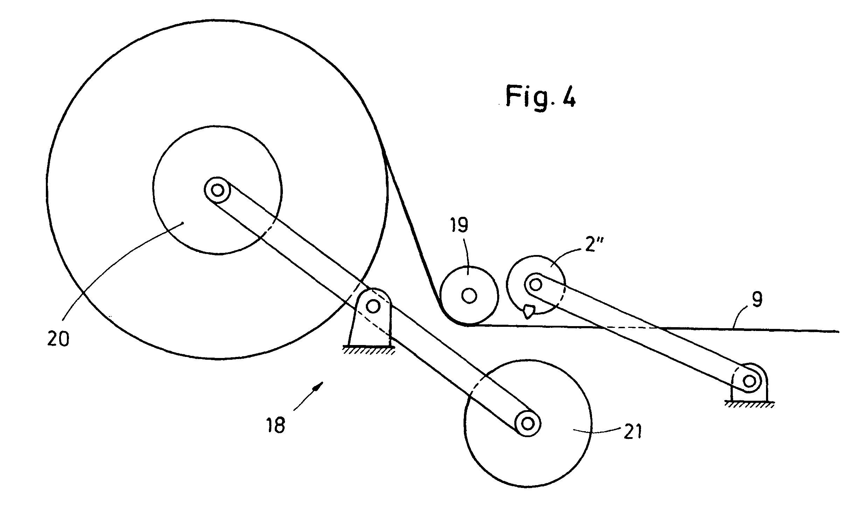

Figur 4 zeigt einen Wendehaspel 18, wobei das Band 9 über eine Umlenkrolle 19 zum Haspel 20 geführt wird. Weist der Haspel 20 die vorgegebene Anzahl von Windungen auf und das Band 9 soll geschnitten werden, so wird die Trommel 2'' gegen den Haspel 21 verschwenkt, wobei die Verschwenkbewegung wie zu Fig. 1 bzw. Fig. 3 ausgeführt erfolgen kann. Der Haspel 21 wirkt als entsprechender Amboß. Nach erfolgtem Schnitt kann das Band 9 sofort auf den Haspel 21 aufgewickelt werden.

### Bezugszeichenübersicht

- 1: Schere
- 2: Trommel
- 3: Trommel
- 4: Schwinge
- 5: Schwenkpunkt
- 6: Meißel
- 7: Amboß
- 8: Antriebsvorrichtung
- 9: Band
- 10: Stützelement
- 11: Kolben-Zylinder-Einheit
- 12: Kurbel
- 13: Antrieb
- 14: Linie
- 15: Pfeil
- 16: Kolben-Zylinder-Einheit
- 17: Arretiervorrichtung
- 18: Wendehaspel
- 19: Umlenkrolle
- 20: Haspel
- 21: Haspel

## Patentansprüche

1. Fliegende Schere (1) mit auf einander gegenüberstehenden Trommeln (2, 3) angeordneten Schneidwerkzeugen (6, 7), die durch mindestens eine ihnen zugeordnete Antriebsvorrichtung (8) auf eine der Geschwindigkeit des zu schneidenden Bandes (9) entsprechende Umfangsgeschwindigkeit beschleunigbar sind, wobei eine der Trommeln auf Schwingen (4) gelagert ist, denen eine separat ansteuerbare Anstellvorrichtung zugeordnet ist, wobei die Anstellvorrichtung die Schneidbewegung bewirkende Antriebe (12, 13) umfaßt, **dadurch gekennzeichnet, daß** die Anstellvorrichtung weiter zwischen den Antrieben (12, 13) und den Schwingen (4) angeordnete Stützelemente (10) umfaßt und daß die Stützelemente (10) auf eine Schnitte bewirkende Wirkstellung verkürzbar sind.

2. Fliegende Schere nach Anspruch 1,
**dadurch gekennzeichnet,**
**daß** der Antrieb als Kurbel (12) ausgebildet ist.

3. Fliegende Schere nach Anspruch 1,
**dadurch gekennzeichnet,**
**daß** der Antrieb als Kolben-Zylinder-Einheit (16) ausgebildet ist.

4. Fliegende Schere (1') mit auf einander gegenüberstehenden Trommeln (2', 3') angeordneten Schneidwerkzeugen (6', 7'), die durch mindestens eine ihnen zugeordnete Antriebsvorrichtung (8') auf eine der Geschwindigkeit des zu schneidenden Bandes (9') entsprechende Umfangsgeschwindigkeit beschleunigbar sind wobei eine der Trommeln (2') auf Schwingen (4') gelagert, und der Schere eine separat ansteuerbare Anstellvorrichtung zugeordnet ist, wobei die Anstellvorrichtung Kurbeln (12') aufweist, welche mit der zweiten Trommel (2') verbunden sind, und diese durch achsparallele Verschiebung auf die erste Trommel (3') zu zum Schnitt zu führen vermag,
**dadurch gekennzeichnet,**
**daß** die Schwingen (4') über Stützelemente (10') abgestützt sind, und daß die Stützelemente (10') auf eine Schnitte bewirkende Wirkstellung verkürzbar sind.

5. Fliegende Schere nach einem der Ansprüche 1 bis 4,
**dadurch gekennzeichnet,**
**daß** die Stützelemente (10, 10') in ihrer Wirklänge verriegelbar sind.

6. Fliegende Schere nach einem der Ansprüche 1 bis 5,
**dadurch gekennzeichnet,**
**daß** zwischen den Antriebsvorrichtungen (8; 8') und den Antrieben (12, 13; 12', 13') eine Synchronisation (14, 14') vorgesehen ist.

7. Fliegende Schere nach einem der Ansprüche 1 bis 6,
**dadurch gekennzeichnet,**
**daß** die Schneidwerkzeuge (6, 7; 6', 7') als auf einer Trommel (2, 2') angeordnete Meißel (6; 6') und auf der zweiten Trommel (3, 3') angeordneten als Amboß (7, 7') wirkenden Mantelbereich ausgebildet sind.

8. Fliegende Schere nach einem der Ansprüche 1 bis 7,
**dadurch gekennzeichnet,**
**daß** die Stützelemente (10; 10') vor Beginn des Arbeitshubes der Antriebe (12, 13; 12') in ihre Wirkstellung bringbar sind.

9. Fliegende Schere nach einem der Ansprüche 1 bis 8,
**dadurch gekennzeichnet**
**daß** die Schere (1; 1') Bestandteil eines Haspels (18-20) ist.

## Claims

1. Overhung cutter (1) with cutting tools (6, 7) which are arranged on mutually opposite drums (2, 3) and which can be accelerated by at least one drive device (8) associated therewith to a circumferential speed corresponding to the speed of the strip (9) to be cut, wherein one of the drums is mounted on rockers (4) with which a separately controllable adjusting device is associated and wherein the adjusting device comprises the drives (12, 13) causing the cutting movement, **characterised in that** the adjusting device comprises further support elements (10) arranged between the drives (12, 13) and the rockers (4) and that the support elements (10) can be shortened to an operative setting producing a cut.

2. Overhung cutter according to claim 1, **characterised in that** the drive is constructed as a crank (12).

3. Overhung cutter according to claim 1, **characterised in that** the drive is constructed as a piston-cylinder unit (16).

4. Overhung cutter (1') with cutting tools (6', 7') which are arranged on mutually opposite drums (2', 3') and which can be accelerated by at least one drive device (8') associated therewith to a circumferential speed corresponding to the speed of the strip (9') to be cut, wherein one of the drums is mounted on rockers (4') and a separately controllable adjusting device is associated with the cutter, and wherein the adjusting device comprises cranks (12') which are connected with the second drum (2') and this is capable of being guided to the cut by axial parallel displacement to the first drum (3'), **characterised in that** the rockers (4') are supported by way of support elements (10') and that the support elements (10') can be shortened to an operative setting producing a cut.

5. Overhung cutter according to one of claims 1 to 4, **characterised in that** the support elements (10, 10') are lockable in their effective length.

6. Overhung cutter according to one of claims 1 to 5, **characterised in that** a synchronisation means (14, 14') is provided between the drive devices (8; 8') and the drives (12, 13; 12', 13').

7. Overhung cutter according to one of claims 1 to 6, **characterised in that** the cutting tools (6, 7; 6', 7') are constructed as a chisel (6; 6') arranged on one drum (2, 2') and a circumferential region arranged on the second drum (3, 3') and acting as an anvil (7, 7').

8. Overhung cutter according to one of claims 1 to 7, **characterised in that** the support elements (10; 10') can be brought into their operative setting before start of the working stroke of the drives (12, 13; 12').

9. Overhung cutter according to one of claims 1 to 8, **characterised in that** the cutter (1' 1') is a component of a coiling device (18-20).

## Revendications

1. Cisaille mobile (1) présentant des outils tranchants (6, 7) disposés sur des tambours (2, 3) situés l'un en face de l'autre, lesdits outils pouvant être accélérés par au moins un dispositif d'entraînement (8) qui leur est associé à une vitesse périphérique correspondant à la vitesse du feuillard (9) à découper, un des tambours étant logé sur des bielles oscillantes (4), auxquelles est associé un dispositif de réglage pouvant être commandé séparément, le dispositif de réglage comprenant des entraînements (12, 13) provoquant le mouvement de coupe, **caractérisée en ce que** le dispositif de réglage comprend en outre des éléments de support (10) disposés entre les entraînements (12, 13) et les bielles oscillantes (4) et **en ce que** les éléments de support (10) peuvent être raccourcis à une position de travail provoquant la coupe.

2. Cisaille mobile selon la revendication 1, **caractérisée en ce que** l'entraînement est exécuté sous forme de vilebrequin (12).

3. Cisaille mobile selon la revendication 1, **caractérisée en ce que** l'entraînement est exécuté sous forme d'unité à piston et cylindre (16).

4. Cisaille mobile (1') présentant des outils tranchants (6', 7') disposés sur des tambours (2', 3') situés l'un en face de l'autre, lesdits outils pouvant être accélérés par au moins un dispositif d'entraînement (8') qui leur est associé à une vitesse périphérique correspondant à la vitesse du feuillard (9') à découper, un des tambours (2') étant logé sur des bielles oscillantes (4'), et un dispositif de réglage pouvant être commandé séparément étant associé à la cisaille, le dispositif de réglage présentant des vilebrequins (12'), qui sont reliés au deuxième tambour (2') et pouvant aminer ledit tambour (3') par un déplacement axialement parallèle vers le premier tambour (3') pour réaliser la coupe, **caractérisée en ce que** les bielles oscillantes (4') sont supportées par des éléments de support (10') et **en ce que** les éléments de supports (10') peuvent être raccourcis à une position provoquant la coupe.

5. Cisaille mobile selon l'une quelconque des revendications 1 à 4, **caractérisée en ce que** les éléments de support (10, 10') peuvent être verrouillés à leur longueur de travail.

6. Cisaille mobile selon l'une quelconque des revendications 1 à 5, **caractérisée en ce qu'**on a prévu un dispositif de synchronisation (14, 14') entre les dispositifs d'entraînement (8 ; 8') et les entraînements (12, 13 ; 12', 13').

7. Cisaille mobile selon l'une quelconque des revendications 1 à 6, **caractérisée en ce que** les outils tranchants (6, 7 ; 6', 7') sont exécutés sous forme de ciseaux (6 ; 6') disposés sur un tambour (2, 2') et sous forme de zone de chemise agissant comme enclume (7, 7') disposée sur le deuxième tambour (3, 3').

8. Cisaille mobile selon l'une quelconque des revendications 1 à 7, **caractérisée en ce que** les éléments de support (10, 10') peuvent être amenés avant le début de la course de travail des dispositifs d'entraînement (12, 13 ; 12') dans leur position de travail.

9. Cisaille mobile selon l'une quelconque des revendications 1 à 8, **caractérisée en ce que** la cisaille (1 ; 1') est un composant d'une bobineuse (18-20).
